(19) Europäisches Patentamt
European Patent Office
Office européen des brevets

(11) Veröffentlichungsnummer: **0 003 729**
**B1**

(12) # EUROPÄISCHE PATENTSCHRIFT

(45) Veröffentlichungstag der Patentschrift: **22.07.81**

(21) Anmeldenummer: **78101080.6**

(22) Anmeldetag: **06.10.78**

(51) Int. Cl.³: **C 08 G 69/20,**
C 07 C 127/00, B 29 C 5/04

(54) **Verfahren zur Herstellung von Polyamiden durch aktivierte anionische Polymerisation von Lactamen und dessen Verwendung zum Rotationsguss.**

(30) Priorität: **18.10.77 DE 2746702**

(43) Veröffentlichungstag der Anmeldung:
**05.09.79 Patentblatt 79/18**

(45) Bekanntmachung des Hinweises auf die Patenterteilung:
**22.07.81 Patentblatt 81/29**

(84) Benannte Vertragsstaaten:
**DE FR GB NL**

(56) Entgegenhaltungen:
**DE - A - 1 595 638**
**DE - A - 2 009 179**
**DE - A - 2 637 010**

(73) Patentinhaber: **BAYER AG**
**Zentralbereich Patente, Marken und Lizenzen**
**D-5090 Leverkusen 1, Bayerwerk (DE)**

(72) Erfinder: **Meyer, Rolf-Volker, Dr.**
**Bodelschwinghstrasse 12**
**D-4150 Krefeld (DE)**
Erfinder: **Dhein, Rolf, Dr.**
**Deswatinesstrasse 30**
**D-4150 Krefeld (DE)**
Erfinder: **Fahnler, Friedrich**
**Wimmersweg 60**
**D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 003 729 B1

# Verfahren zur Herstellung von Polyamiden durch aktivierte anionische Polymerisation von Lactamen und dessen Verwendung zum Rotationsguss

Gegenstand der Erfindung ist ein Verfahren zur Herstellung von Polyamiden durch die aktivierte anionische Polymerisation von Lactamen.

Die aktivierte anionische Polymerisation von Lactamen wird zur Herstellung von Polyamidformkörpern nach den unterschiedlichsten Verfahrenstechniken eingesetzt. Der störungsfreie Verlauf der Polymerisation sowie die Qualität der nach den verschiedenen Verfahren hergestellten Polyamide hängt nicht nur vom Katalysator, sondern in bedeutendem Maße auch von der Art des verwendeten Aktivators ab.

Ein vielzahl von Verbindungen sind als Aktivatoren bei der anionischen Polymerisation von Lactamen eingesetzt worden, so z.B. Acyl-Lactame, substituierte Triazine, Carbodiimide, Cyanimide, Isocyanate sowie die entsprechenden maskierten Iso-cyanatverbindungen. Prinzipiell können die Aktivatoren mono- oder polyfunktionell sein, wobei polyfunktionelle Aktivatoren Bekanntermaßen zu höhermolekularen, zum Teil vernetzten Produkten führen.

In der Praxis vielfach eingesetzte Aktivatoren sind Polyisocyanate, bevorzugt Diisocyanate. Besonders bevorzugt wird Hexamethylendiisocyanat verwendet, da die leicht bewegliche Flüssigkeit besonders bei den kontinuierlichen Verfahrensweisen, bei denen es auf genau bemessene Zufuhr über Dosierpumpen ankommt, große Vorteile bietet. Von erheblichem Nachteil ist jedoch die Toxizität des Hexamethylendiisocyanat infolge des hohen Dampfdrucks (399.96 Pa (3 Torr) bei 102°C, 2666.44 Pa (20 Torr) bei 143°C), die bei jeder Operation besondere Vorsichtsmaßnahmen erforderlich macht. Dies gilt besonders im Falle möglicher Betriebsstörungen, die ein Offnen von Pumpen und Zuleitungen erfordern.

Das in der DAS 1 420 241 vorgeschlagene Hexamethylenbiscarbamido-caprolactam ist zwar physiologisch unbedenklich, aber, wie praktisch alle mit Lactamen diverkappten Diisocyanate, als kristalline Substanz für die kontinuierliche Fahrweise praktisch nicht einsetzbar.

Die bekannten mehrfunktionellen Aktivatoren haben somit den Nachteil, entweder infolge ihres niedrigen Dampfdruckes relativ gefahrlos handhabbar, dabei jedoch kristallin, oder aber flüssig, dabei wegen des höheren Dampfdrucks der freien Diisocyanate toxisch zu sein.

Die naheliegende Verwendung von niedrigviskosen Lösungen kristalliner Aktivatoren in inerten Lösungsmitteln ist wegen der durch die relativ großen Lösungsmittelmengen (meist > 100%) bedingten Nachteile, wie schlechter Qualität der Polymerisate durch Lunker- oder gar Schaumbildung, nicht praxisgerecht. Aber selbst geringe Mengen Lösungsmittel verursachen bereits durch Bildung vieler kleiner Bläschen im Polymerisat eine unerwünschte Minderung der Qualität des Polyamids.

Die Verwendung von Schmelzen ist wegen der dadurch bedingten Notwendigkeit beheizter Pumpen- und Rohrleitungen sowie durch mögliche Rückspaltung der maskierten Isocyanate nachteilig.

Überraschenderweise wurde nun gefunden, daß Isocyanatgruppen aufweisende Allophanate mit dynamischen Viskositäten under 5000 mPas Aktivatoren darstellen, die die genannten Nachteile nicht aufweisen.

Diese Art von Aktivatoren erfüllt die Anforderung bezüglich gefahrloser Handhabbarkeit, Fließfähigkeit, guter Lagerfähigkeit, hoher Reaktivität und guter Eigenschaften der mit Hilfe der Aktivatoren hergestellten Polyamide.

Gegenstand der Erfindung ist daher ein Verfahren zur Herstellung von Polyamiden durch Polymerisation von Lactamen in Gegenwart von Katalysatoren und Aktivatoren, das dadurch gekennzeichnet ist, daß als Aktivatoren Isocyanatallophanate verwendet werden, die einen NCO-Gehalt von 10—25 Gew.-% und dynamische Viskositäten von max. 5000 mPas (bei 25°C), vorzugsweise max. 2000 mPas aufweisen.

Zur Herstellung der erfindungsgemäßen Aktivatoren werden als Ausgangsmaterialien Urethanisocyanate eingesetzt. Diese Verbindungen werden im allgemeinen durch Umsetzung von Isocyanaten mit alkoholischen Hydroxylgruppen aufweisenden Verbindungen erhalten. Vorzugsweise sind es Verbindungen der allgemeinen Formel

$$A—(O—\overset{\overset{\displaystyle O}{\|}}{C}—NH—R_1—NCO)_n$$

in welcher

A für einen Rest steht, der durch Entfernung der Hydroxylgruppen aus einer n-wertigen organischen Hydroxylgruppen aufweisenden Verbindung erhalten wird und der abgesehen von den Hydroxylgruppen gegenüber Isocyanatgruppen inert ist,

$R_1$ für einen Rest steht, wie er durch Entfernung der Isocyanatgruppen aus einem organischen Diisocyanat erhalten wird und

n für eine ganze Zahl von 1 bis 4, vorzugsweise 1 oder 2 steht.

Entsprechend diesen Ausführungen werden die zur Herstellung der erfindungsgemäßen Aktivatoren einzusetzenden Isocyanatgruppen aufweisenden Urethane der genannten allgemeinen Formel vorzugsweise durch Umsetzung von Hydroxylgruppen aufweisenden Verbindungen der Formel

$$A—(OH)_n$$

mit Diisocyanaten der Formel

$$R_1(NCO)_2$$

erhalten, wobei pro Mol der Hydroxylgruppen aufweisenden Verbindung vorzugsweise mindestens n Mol des Diisocyanats zum Einsatz gelangen. Es ist jedoch auch möglich, bei dieser, zu den Urethangruppen aufweisenden Ausgangsmaterialien führenden Umsetzung pro Mol der Hydroxylgruppen aufweisenden Verbindung $A(OH)_n$ weniger als n Mole eines Diisocyanats einzusetzen, d.h. die Menge des Diisocyanats so zu bemessen, daß sie im Bereich zwischen 0,5 n und 1 n Mol pro Mol der Hydroxylgruppen aufweisenden Verbindung liegt. In diesem Falle würden wegen der eintretenden Kettenverlängerungsreaktion über Urethangruppen mehr als n Urethangruppen aufweisende Ausgangsmaterialien entstehen.

Als Hydroxylverbindungen $A(OH)_n$ können alkoholische Hydroxylgruppen aufweisende organische Verbindungen, vorzugsweise niedermolekulare gegebenenfalls Ätherbrücken enthaltende 1- bis 4-wertige aliphatische mit $C_1—C_{18}$, araliphatische mit $C_7—C_{15}$ und/oder cycloaliphatische mit $C_5—C_{17}$ Alkohole des Molgewichtsbereichs 32—300 eingesetzt werden.

Bevorzugt werden Hydroxylverbindungen der genannten Typen mit nur einer OH-Gruppe verwendet, da diese zu besonders niedrigviskosen und damit sehr fließfähigen Aktivatoren führen.

Biespiele für geeignete Monohydroxyverbindungen sind niedere aliphatische Alkohole wie Methanol, Äthanol, Propanol, Isopropanol, isomere Butanole, Allylalkohol, Pentanole, Hexanole, Heptanole, . 2-Äthylhexanol, Fettalkohole mit 10—18 Kohlenstoffatomen, cycloaliphatische Alkohole wie Cyclopentanol, Cyclohexanol, Methylcyclohexanol, Cyclohexenylcyclohexanol oder Phenylalkylalkohol wie Benzylalkohol, Pentyläthylalkohol, Äthylen-glykolmonoalkyläther.

Selbstverständlich können auch Mischungen der vorstehend genannten Hydroxylverbindungen eingesetzt werden. Dies ist sogar eine besonders bevorzugte Ausführungsform zur Herstellung der erfindungsgemäß verwendeten Aktivatoren, da durch Einsatz eines Gemisches von Hydroxylverbindungen die Fließfähigkeit der entstehenden Polyisocyanat-Aktivatoren in gewünschter Weise variiert werden kann.

Zur Herstellung der als Ausgangsmaterialien dienenden Urethangruppen aufweisenden Verbindungen, sowie als deren Reaktionspartner zur Herstellung der Isocyanatallophanate kommen vorzugsweise Diisocyanate der Formel

$$R_1(NCO)_2$$

zu Einsatz, wobei

$R_1$ für einen aliphatischen Rest mit 2 bis 20, vorzugsweise 6 bis 10, Kohlenstoffatomen, einen cycloaliphatischen Rest mit 4 bis 20, vorzugsweise 6 bis 15 Kohlenstoffatomen, einen aromatischen Rest mit $C_6—C_{20}$, vorzugsweise $C_6$ bis $C_{16}$, oder einen aliphatisch-aromatischen Rest mit $C_7—C_{21}$, vorzugsweise $C_7—C_{18}$, steht.

Beispeile derartiger Isocyanate sind Äthylendiisocyanat, Tetramethylendiisocyanat, Hexamethylendiisocyanat, Undecamethylen-diisocyanat, 2,2,4- und 2,4,4-Trimethyl-1,6-diisocyanatohexan, 3-Isocyanatomethyl-3,5,5-trimethyl-cyclohexylisocyanat, 1,4-Diisocyanatocyclohexan, Diisocyanatodicyclohexylmethane, m- und/oder p-Xylylendiisocyanat. Sowohl bei der Herstellung der erfindungsgemäß einzusetzenden Urethangruppen aufweisenden Verbindungen als auch als deren Reaktionspartner zur Herstellung der Isocyanatallophanate werden derartige Diisocyanate eingesetzt.

Durch Wahl bestimmter Mischungsverhältnisse bei der Isocyanatkomponente kann — wie bei der Wahl der OH-Komponente — der Viskositätsbereich weitgehend beliebig eingestellt werden. Vorzugsweise werden wegen ihrer höheren Aktivierungseigenschaften Diisocyanate eingesetzt, bei denen beide NCO-Gruppen an primäre C-Atome gebunden sind, bevorzugt an aliphatische oder cycloaliphatische Kohlenwasserstoffreste.

Besonders bevorzugt ist Hexamethylendiisocyanat.

Nach eine bevorzugten Variante zur Synthese der erfindungsgemäß verwendeten Aktivatoren unter Herstellung der Urethangruppen aufweisenden Ausgangsverbindung in situ wird wie folgt verfahren:

Das vorzugsweise als Isocyanat-Komponente eingesetzte Diisocyanat wird bei 50—80°C vorgelegt und die Hydroxyl-Komponente in flüssiger Form unter gutem Rühren eingetropft. Soll für die Urethanbildung und die Allophanatbildung das gleiche Isocyanat bzw. Isocyanatgemisch verwendet werden, so setzt man es am einfachsten von Anfang an in einem solchen Überschuß ein, daß das NCO/OH-Verhältnis etwa zwischen 3:1 und 12:1 liegt.

Nach erfolgter Urethanreaktion — kontrolliert durch Bestimmung des NCO-Gehaltes — wird der Katalysator (im allgemeinen Chlorwasserstoff) zugegeben. Nun wird die Temperatur auf 90—140°C gesteigert und so lange gerührt, bis der NCO-Gehalt auf den für vollständige Allophanatisierung errechneten Wert abgesunken ist.

Nach beendeter Reaktion wird der Katalysator zusammen mit überschüssigem Diisocyanat durch Dünnchichtdestillation abgetrennt.

Die Allophanatreaktion kann durch das nachfolgende Reaktionsschema schematisch dargestellt werden:

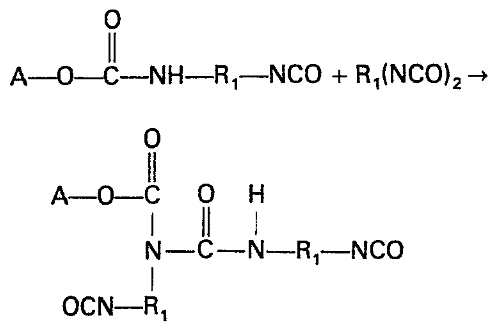

Bei der Herstellung der erfindungsgemäßen verwendeten Aktivatoren sollen 3—10 Diisocyanate mit einer Isocyanaturethanverbindung jeweils über die NH-Gruppe reagieren, um die erfindungsgemäß verwendeten Allophanat-Polyisocyanate mit einem NCO-Gehalt von 10—25, vorzugsweise 15—20 Gew.-% und dynamische Viksositäten von max. 5000 Pas, vorzugsweise max. 2000 mPas, gemessen nach der Fallkörpermethode von Höppler zu erhalten. Sie zeichnen sich durch hervorragende Stabilität während der Dünnschichtbehandlung auch oberhalb von 180°C aus.

Die erfindungsgemäß verwendeten Aktivatoren sind infolge ihres extrem niedrigen Gehaltes an freiem Diisocyanat sowie ihres neidrigen Dampfdruckes (1.33 Pa ($< 10^{-2}$ Torr) bei 100°C, ca. 13.33 Pa (0,1 Torr) bei 140°C) relativ gefahrlos handhabbar, physiologisch weniger bedenklich sowie auf handelsüblichen Pumpen ohne Schwierigkeiten zu fördern. Die Aktivatoren reagieren bei Raumtemperatur nicht merklich mit Wasser und sind im Falle einer Betriebsstörung oder Reinigung in häufig benutzten Spülmitteln wie z.B. Isopropanol trotz allmählicher Reaktion mit dem Alkohol leicht löslich.

Insbesondere ist auch die ausgezeichnete Lagerstabilität der von überschüssigem Ausgangsisocyanat befreiten, Allophanatpolyisocyanate hervorzuheben. Die Aktivatoren zeigen keinerlei Tendenz zur Abspaltung von monomerem Ausgangsisocyanat und unterscheiden sich insbesondere in diesem Punkt vorteilhaft von anderen Typen polymerisierter Diisocyanate.

Bei der Durchführung der anionischen aktivierten Lactampolymerisation werden die Aktivatoren kontinuierlich oder diskontinulierlich in den üblichen Konzentrationen von bevorzugt 0,1—1 Mol-% der zu polymerisierenden Lactamschmelze zudosiert.

Als Katalysatoren können in den bekannten Konzentrationen alle Katalysatoren, die bei der anionischen Polymerisation von Lactamen Anwendung finden, in üblichen Mengen eingesetzt werden, vorzugsweise Alkali- und Erdalkalilactame wie Natriumlactamate, Natriumhydrid sowie auch latente Katalysatoren.

Die erfindungsgemäßen Aktivatoren eignen sich zur Polymerisation von Lactamen mit mindestens 5-Ringgliedern, wie z.B. $\alpha$-Pyrrolidon, $\varepsilon$-Caprolactam, C-substituierte Caprolactame, Laurinlactam oder von Gemischen der genannten Lactame.

Besonders bevorzugt sind als Aktivatoren Allophanatisocyanate, die aus Hexamethylendiisocyanat und $C_1$—$C_5$-Monoalkoholen hergestellt werden.

Die Aktivatoren können bei jeder bekannten Verfahrensweise der aktivierten anionischen Polymerisation von Lactamen, vorzugsweise bei kontinuierlichen, eingesetzt werden.

So können sie bei der Halbzeugherstellung nach dem Verfahren des drucklosen Gießens verwendet werden. Hierbei werden zwei getrennte, mit Katalysator bzw. Aktivator versetzte Lactamschmelzen hergestellt, die unmittelbar nach ihrer Vereinigung und Durchmischung in eine Gießform eingebracht werden. Die Polymerisation wird üblicherweise bei Temperaturen zwischen 140 und 200°C ausgeführt, wobei das entstehende Polyamid die Gestalt der Form annimmt. Die Aktivatoren können bei dem Rotationsgußverfahren eingesetzt werden, bei dem eine polymerisationsfähige Schmelze in eine um zwei aufeinander in einem Winkel stehenden Achsen rotierende Form eingebracht und die Polymerisation durch Aufheizen eingeleitet wird.

Weitere Beispiele für Verfahrenstechniken, in denen die erfindungsgemäß aktivierte anionische Polymerisation verwendet wird, sind der Rollguß und die Polymerisation im Zylinder eines Extruders oder einer Spritzgußmaschine.

Besondere Bedeutung kommt dem erfindungsgemäßen Verfahren im Bereich des Rotationsgusses zur Herstellung großvolumiger Hohlkörper, wobei die Produkte gegenüber mit herkömmlichen Aktivatoren hergestellten eine deutliche verbesserte Schlagzähigkeit aufweisen.

Die so herstellbaren großvolumigen Hohlkörper werden überwiegend als Heizöllagertanks vorwiegend als Batterietanks, eingesetzt. eingesetzt.

### Beispiel 1

a) Herstellung eines Isocyanatalophanats

In einem 6 Ltr.-Dreihalskolben wurden zu 3024 g (18 Mol) Hexamethylen-diisocyanat bei 70°C im Verlauf von 30 Min. 333 g (4,5 Mol) n-Butanol zugetropft. Nach weiteren 30 Min. Reaktionszeit bei 70°C hatten sich alle OH-Gruppen zu Urethangruppen umgesetzt.

Es wurden 7,2 g (0,2 Mol) Chlorwasserstoff eingeleitet und die Temperatur auf 100°C erhöht. Nach einer Reaktionszeit von 8 Std. waren alle Urethangruppen in Allophanatgruppen umgewandelt. Das Rohprodukt wurde einer Dünnschichtdestillation unterworfen, wobei neben überschüssigem Hexamethylendiisocyanat ein farbloses allophanatgruppenhaltiges Polyisocyanat mit einem NCO-Gehalt

von 17,3% erhalten wurde.

Die Viskosität betrug bei 25°C 160 mPas. Das Produkt entheilt noch 0,46% freies Hexamethylendiioscyanat.

Nach 40 Tagen Lagerung bei 50°C betrug der Gehalt an freiem Hexamethlendiisocyanat unverändert 0,46%.

b) Durchführung der Polymerisation

97,6 Gew.-Tle $\varepsilon$-Caprolactam werden auf 2 Behälter gleichmäßig verteilt. Eine Hälfte mischt mit 1,6 Gew.-Tln einer festen, 80%igen Lösung von Natriumcaprolactamat in Caprolactam zu, der anderen Hälfte 0,7 Gew.-Tle des nach a) hergestellten Aktivators und schmilzt bei 120°C die Mischungen unter $N_2$ auf. Mittels Dosierpumpen werden die Schmelzen im Verhältnis 1:1 in einem Mischkopf vereinigt und in ein auf 180°C geheiztes Rotationswerkzeug mit den Maßen 300 × 200 × 180 mm eingespeist. Nach der Eingabe von 1600 g reaktiver Lactamschmelze wird die Zufuhr unterbrochen. Unter biaxialer Rotation des Werkzeuges, wobei um die Primärachse mit Drehzahlen von 25 $Min^{-1}$ und um die Sekundärachse mit Drehzahlen von 10 $Min^{-1}$ rotiert wird, erzeugt man einen Polyamidhohlkörper mit einer Wanddicke von 4 mm. Die Polymerisation ist nach 3 Min. beendet und nach einer Kühlzeit von 1 Min an der Luft wird der hohlkörper entnommen.

Die Hohlkörper werden 24 Stunden in einem Normklima (23°C, 50% relative Luftfeuchtigkeit) gelagert. Aus der Wand der Hohlkörper werden Prüfkörper in Gestalt von Normkleinstäben mit den Maßen Dicke 4 mm, Länge 50 mm und Breite 6 mm zur Messung der Kälteschlagzähigkeit nach DIN 53 453 spangebend herausgearbeitet. Vor der Messung der Kälteschlagzähigkeit werden diese Normkleinstäbe 16 Stunden auf −15°C gekühlt.

Die für den Polymerisationsverlauf charakterisitischen Daten sowie die Meßwerte der Kälte-Schlagzähigkeit sind in Tabelle 1 zusammengestellt.

Beispiele 2—6

Weitere Polymerisationsversuche wurden mit analog Beispiel 1a) hergestellten anderen Aktivatoren nach der in Beispiel 1b beschreibenen Verfahrensweise durchgeführt.

Die Charakterisierung der Aktivatoren sowie der analog Beispiel 1b, erhaltenen Polyamide ist ebenfalls in Tabelle 1 zusammengefaßt.

TABELLE 1

Charakterisierung der in den Beispielen 2 bis 7 verwendeten Aktivatoren sowie Polymerisationsdaten und Eigenschaften der Polyamide

| Bsp. | Aktivator hergestellt aus (Mol–Verh.) | | NCO–Geh. (%) | $\eta$ 25 °C (mPas) | Menge Aktiv. (Gew.–%) | $t_i$ x) | Extrakt-Gehalt (Gew.–%) | $\eta rel$ xx) | Schlagzähigkeit (kJ/m²) | |
|---|---|---|---|---|---|---|---|---|---|---|
| | | | | | | | | | Außenseite | Innenseite |
| 2 | HMDI /n-Butanol | 4 : 1 | 17,3 | 160 | 0,7 | 7'10" | 2,7 | 6,3 | 42,0 | 52,2 |
| 3 | HMDI /Methanol | 4 : 1 | 19,5 | 260 | 0,6 | 7'35" | 4,6 | 5,6 | 40,5 | 48,0 |
| 4 | HMDI /Cyclohexanol | 4 : 1 | 16,4 | 900 | 0,8 | 7'15" | 3,7 | 6,2 | 38,6 | 42,0 |
| 5 | HMDI /2-Äthylhexanol | 4 : 1 | 14,9 | 240 | 0,8 | 8'40" | 3,6 | 5,6 | 40,8 | 46,9 |
| 6 | HMDI /Diäthylenglykol-monobutyläther | 4 : 1 | 15,2 | 150 | 0,8 | 9'20" | 5,2 | 5,4 | 37,5 | 42,4 |
| 7 | HMDI /1,2-Propylenglykol /Cyclohexanol | 10 : 1 : 1 | 17,7 | 4600 | 0,7 | 8'25" | 4,8 | 6,7 | 41,5 | 49,5 |

HMDI = Hexamethylendiisocyanat

x) Die Polymerisationszeit $t_i$ wurde in Versuchen im 100 g-Maßstab bestimmt.

$t_i$ ist die Zeit vom Eintauchen der kompletten Reaktionsmischung in das Weizbad von 180 °C. bis zum beginnenden Viskositätsanstieg.

xx) $\eta_{rel}$ = Visk. des Polyamids (1 proz. Lösung in m-Kresol bei 25 °C).

**Patentansprüche**

1. Verfahren zur Herstellung von Polyamiden durch Polymerisation von Lactamen in Gegenwart von Katalysatoren und Aktivatoren, dadurch gekennzeichnet, daß als Aktivatoren Isocyanatallophanate verwendet werden, die einen NCO-Gehalt von 10—25 Gew.-% und dynamische Viskositäten von max. 5000 mPas (bei 25°C) aufweisen.

2. Verfahren nach Anspruch 1, dadurch gekennzeichnet, daß die Isocyanatallophanate durch bekannte Umsetzung von aliphatischen, araliphatischen oder cycloaliphatischen Alkoholen und organischen Diisocyanaten erhalten wurden.

3. Verfahren nach Ansprüchen 1 und 2, dadurch gekennzeichnet, daß die Isocyanatallophanate durch Umsetzung von Hexamethylendiisocyanat und $C_1$—$C_5$-Monoalkoholen erhalten wurden.

4. Verfahren nach Ansprüchen 1—3 zur Herstellung von Polyamidhohlkörpern nach dem Rotationsgußverfahren.

**Revendications**

1. Procédé de production de polyamides par polymérisation de lactames en présence de catalyseurs et d'activateurs, caractérisé en ce qu'on utilise comme activateurs des isocyanatallophanates qui présentent une teneur en NCO de 10—25% en poids et qui ont des viscosités dynamiques au maximum égales à 5000 mPa.s (à 25°C).

2. Procédé suivant la revendication 1, caractérisé en ce que les isocyanatallophanates ont été obtenus par réaction connue d'alcools aliphatiques, araliphatiques ou cycloaliphatiques et de diisocyanates organiques.

3. Procédé suivant les revendications 1 et 2, caractérisé en ce que les isocyanatallophanates ont été obtenus par réaction d'hexaméthylènediisocyanate et de monoalcools en $C_1$—$C_5$.

4. Procédé suivant les revendications 1 à 3, pour la production de corps creux en polyamide par le procédé de moulage par rotation.

**Claims**

1. A process for the preparation of polyamides by polymerising lactams in the presence of catalysts and activators, characterised in that isocyanatoallophanates are used as activators which have an isocyanate content of 10—25% by weight and dynamic viscosities of a maximum of 5000 mPas (at 25°C).

2. A process according to claim 1, characterised in that the isocyanatoallophanates have been obtained by known reaction of aliphatic, araliphatic or cycloaliphatic alcohols and organic diisocyanates.

3. A process according to claims 1 and 2, characterised in that the isocyanatoallophanates have been obtained by reacting hexamethylene diisocyanate with $C_1$—$C_5$ monoalcohols.

4. A process according to claims 1—3 for the production of polyamide hollow bodies according to the rotational moulding process.